# FASCICULE DE BREVET EUROPEEN

(11) **EP 1 097 097 B1**
(45) Date de publication et mention de la délivrance du brevet: **16.10.2002**
(21) Numéro de dépôt: 99929398.8
(22) Date de dépôt: 05.07.1999
(51) Int. Cl.: B65G 51/03

(54) **CONVOYEUR A AIR POUR LE TRANSPORT D'ARTICLES SUSPENDUS ET PROCEDES DE DEBLOCAGE, DE RALENTISSEMENT, D'IMMOBILISATION OU DE CADENCEMENT D'ARTICLES**
LUFTFÖRDERER FÜR HÄNGENDE GEGENSTÄNDE UND VERFAHREN ZUR DEBLOCKIERUNG, BREMSUNG, RÜCKHALTUNG UND TEMPOREGELUNG VON GEGENSTÄNDE
AIR CONVEYOR FOR TRANSPORTING SUSPENDED ARTICLES AND MEANS FOR RELEASING, SLOWING, IMMOBILISING OR SYNCHRONISING ARTICLES

(30) Priorité: 21.07.1998 FR 9809525
(43) Date de publication de la demande: 09.05.2001
(73) Titulaire: Netra Systems, 59700 Marcq en Baroeul (FR)
(72) Inventeur: DE ALMEIDA RODRIGUES, Carlos, F-59000 Lille (FR); TRENEL, Jo[l, F-59700 Marcq en Baroeul (FR); ROSE, Damien, F-59800 Lille (FR)
(74) Mandataire: Matkowska, Franck
(86) Numéro de dépôt international: FR9901613
(87) Numéro de publication internationale: WO00005160

(56) Documents cités:
- WO-A-90/10587
- US-A- 4 284 370
- US-A- 5 161 919

## Description

La présente invention concerne un nouveau convoyeur à air pour le transport d'articles suspendus, dont les moyens aérauliques permettant de générer des jets d'air en direction des articles ont été perfectionnés, en sorte notamment mais non exclusivement, de faciliter le déblocage d'articles qui se sont bloqués accidentellement en cours de transport. Elle a également pour autres objets un procédé de déblocage d'articles accidentellement bloqués au cours de leur transport dans un convoyeur à air, un procédé de ralentissement ou d'immobilisation d'articles en cours de transport, et un procédé de cadencement d'articles en cours de transport. Elle trouve avantageusement son application dans le domaine du convoyage pneumatique d'articles légers, tel que par exemple des bouteilles ou flacons vides en plastique qui sont transportés en étant suspendus par l'intermédiaire de leur collerette ou similaires.

Pour transporter des articles légers, et plus particulièrement des bouteilles plastiques ou similaires, il est à ce jour connu d'utiliser des convoyeurs à air équipés de moyens de soufflage permettant de créer une pluralité de jets d'air orientés sur les articles dans leur direction de transport.

Pour les articles qui peuvent être suspendus, tels que par exemple des bouteilles en plastique comportant au niveau de leur col une collerette, on utilise plus particulièrement des convoyeurs à air qui sont équipés d'un rail de guidage, plus communément appelé guide sous-col, le long duquel les articles sont guidés et transportés en étant suspendus par l'intermédiaire de leur collerette ou similaire. Ce type de convoyeur est décrit par exemple dans le brevet US 4,284,370 ou encore dans le brevet US 5,161,919. Il met en oeuvre une gaine d'air principale, communément appelée *plenum* et s'étendant le long du trajet des articles, et un canal de soufflage communiquant avec la gaine d'air principale par l'intermédiaire de fentes de soufflage ou similaire. La gaine principale est alimentée en air par exemple au moyen de plusieurs ventilateurs judicieusement répartis sur toute sa longueur ; cet air est évacué par les fentes de soufflage sous la forme d'une pluralité de jets d'air permettant de propulser les articles le long du canal de soufflage. Dans le brevet US 4,284,370, le canal de soufflage a une section rectangulaire et les fentes de soufflage sont disposées au-dessus du rail de guidage, ce qui permet de propulser les articles en soufflant au-dessus de leur collerette. Dans le brevet US 5,161,919, le canal de soufflage a la forme d'un V inversé, et les fentes de soufflage sont disposées au-dessous du rail de guidage, ce qui permet de propulser les articles en soufflant sous leur collerette,

Lorsque l'on transporte par exemple des bouteilles plastiques avec les convoyeurs à air précités, les bouteilles étant suspendues par l'intermédiaire de leur collerette ou similaire, elles ont tendance en cours de transport à osciller longitudinalement vers l'avant et l'arrière dans un plan vertical parallèle à leur direction de transport. Ces mouvements d'oscillations avant/arrière sont connus pour être la cause de blocage avant ou arrière des bouteilles par rapport au rail de guidage. Un blocage avant ou arrière se produit par exemple lorsqu'une bouteille oscille vers l'avant ou vers l'arrière de manière trop importante et se trouve bloquée par rapport au rail de guidage dans cette position par exemple par la bouteille qui la suit immédiatement après. Les blocages sont également fréquents en accumulation. Par exemple, lorsqu'une bouteille arrive trop rapidement au contact d'un train de bouteilles accumulées, elle peut s'enrouler sur cette bouteille en basculant longitudinalement vers l'arrière. Dans ce cas, la bouteille suivante lorsqu'elle vient au contact de cette bouteille en basculement arrière exerce sur cette dernière une pression qui se traduit par une remontée de la bouteille en basculement arrière et par un coincement de cette bouteille notamment dans le rail de guidage. Egalement en accumulation, les bouteilles sont comprimées les unes contre les autres, et ont tendance à remonter et à se bloquer dans le rail de guidage.

A ce jour, lorsqu'un blocage d'une bouteille survient, on est contraint d'intervenir manuellement pour débloquer la bouteille immobilisée et par là-même les bouteilles qui se sont accumulées derrière cette bouteille. Ces interventions manuelles prennent un temps relativement important et peuvent être préjudiciables en termes de productivité, en particulier lorsqu'on est obligé d'arrêter la machine en amont et/ou la machine en aval du convoyeur. En outre, sur certains types de convoyeurs, l'accès aux bouteilles en cours de transport n'est pas aisé, les bouteilles étant par exemple transportées en hauteur ou à l'intérieur d'un convoyeur fermé.

La présente invention propose un nouveau convoyeur à air dont l'un des avantages principaux est de permettre un déblocage rapide des articles transportés, sans intervention manuelle.

Le convoyeur à air de l'invention est connu en ce qu'il comporte un rail de guidage sur lequel les articles sont destinés à être suspendus pour leur transport, et des premiers moyens pneumatiques permettant la propulsion des articles le long du rail de guidage dans une direction de transport donnée.

De manière caractéristique selon l'invention, le convoyeur à air comprend des deuxièmes moyens pneumatiques qui sont conçus pour générer sur commande une pluralité de jets d'air inverses (R) orientés sur les articles dans une direction opposée à celle de leur direction de transport.

Grâce au convoyeur de l'invention, il est notamment possible en cas de blocage d'un article, de commander l'alimentation en air au moins du tronçon aéraulique dans lequel s'est produit un blocage, ce qui a pour effet principal de décomprimer les articles qui se sont accumulés les uns par rapport aux autres et de faire retomber l'article qui a provoqué le blocage. En outre, lors du redémarrage ultérieur des articles dans la direction de transport, les articles situés en amont de l'article bloqué exercent sur ce dernier une action mécanique complémentaire facilitant son déblocage.

En cas de blocage avant, il peut être également avantageux de commander l'alimentation en air d'un ou plusieurs tronçons aérauliques situés immédiatement en aval du tronçon dans lequel s'est produit le blocage, en sorte de faire revenir en arrière des articles situés en aval et exercer une action mécanique complémentaire de déblocage sur l'article en blocage avant.

Dans une variante particulière de réalisation, le convoyeur de l'invention comprend des moyens de commande automatique de l'alimentation en air de chaque compartiment de soufflage inverse, et des moyens de détection du blocage d'un ou plusieurs articles dans le convoyeur, qui délivrent des signaux de détection pour les moyens de commande ; les moyens de commande sont conçus pour commander automatiquement et de manière sélective, à partir des signaux de détection, l'alimentation en air au moins du compartiment de soufflage inverse au niveau duquel un point de blocage a été détecté.

De préférence, les moyens de commande sont également conçus pour commander automatiquement, à partir des signaux de détection, l'alimentation en air d'au moins un compartiment de soufflage inverse situé immédiatement en aval du compartiment au niveau duquel un blocage a été détecté, en sorte de faire revenir en arrière un ou plusieurs articles situés en aval du point de blocage.

L'invention a pour autre objet un procédé de déblocage d'un article ou d'une pluralité d'articles qui se sont accidentellement bloqués au cours de leur transport dans un convoyeur à air, dans lequel les articles sont transportés en étant suspendus.

De manière caractéristique selon l'invention, le procédé consiste à générer temporairement, au moins sur tout ou partie des articles qui sont bloqués, des jets d'air inverses qui sont orientés dans la direction opposée à la direction de transport des articles.

Selon une caractéristique additionnelle du procédé de l'invention, on génère en outre temporairement, en aval du point de blocage, des jets d'air inverses orientés dans la direction opposée à celle de la direction de transport des articles, en sorte de faire revenir en arrière au moins un article situé immédiatement en aval du point de blocage et de l'acheminer au contact du ou des articles bloqués.

L'invention a pour autre objet un procédé de ralentissement ou d'immobilisation d'un ou plusieurs articles qui sont suspendus et propulsés le long d'un rail de guidage sous l'action de jets d'air de transport. De manière caractéristique selon l'invention, le procédé consiste à générer sur les articles des jets d'air inverses qui sont orientés dans la direction opposée à la direction de transport des articles. Dans le cadre de l'invention, le ralentissement ou l'immobilisation des articles peut être obtenu en mettant en oeuvre les jets d'air inverses simultanément aux jets d'air de transport. Dans un cas extrême, si l'on souhaite ralentir ou immobiliser très rapidement les articles, il est également envisageable de mettre en oeuvre momentanément uniquement les jets d'air inverses, pendant un temps suffisant pour obtenir le ralentissement ou l'immobilisation souhaitée.

L'invention a enfin pour autre objet un procédé de cadencement d'articles suspendus et propulsés le long d'un rail de guidage. Ce procédé consiste d'une part sur une première portion du trajet des articles, à ralentir et éventuellement à immobiliser le ou les articles en générant sur les articles dans cette première portion des jets d'air inverses (R) orientés dans la direction inverse de transport des articles, et d'autre part en sortie de la première portion à accélérer le ou les articles sous l'action des jets d'air de transport.

D'autres caractéristiques et avantages de l'invention apparaîtront plus clairement à la lecture de la description qui va à présent être faite d'un exemple préféré de réalisation d'un convoyeur à air conforme à l'invention, laquelle description est donnée à titre d'exemple non limitatif et en référence au dessin annexé sur lequel :
- la figure 1 est une coupe transversale de principe, d'un convoyeur conforme à l'invention, au niveau d'un tronçon aéraulique configuré en sens normal de transport,
- la figure 2 est une coupe transversale de principe, d'un convoyeur conforme à l'invention, au niveau d'un tronçon aéraulique configuré en sens inverse de transport,
- la figure 3 est une coupe longitudinale de principe du convoyeur des figures 1 ou 2,
- la figure 4 est une vue schématique de dessus du convoyeur,
- la figure 5 est une représentation schématique illustrant le découpage en tronçons aérauliques du convoyeur des figures 1 à 4, ainsi que les moyens de détection et de commande de ce convoyeur,
- la figure 6 illustre les trois phases principales de blocage et déblocage d'un train de bouteilles.

Le convoyeur à air illustré sur les figures annexées est adapté au transport pneumatique d'articles comportant une collerette ou similaire, qui permet leur suspension en cours de transport. Dans l'exemple de réalisation illustré, les articles sont plus particulièrement constitués par des bouteilles 1 en plastique comportant au niveau de leur col une protubérance 2 formant collerette. Le convoyeur à air comporte de manière usuelle un rail de guidage longitudinal 3, réalisé à l'aide de deux guides sous-col opposés 4. Les bouteilles 1 sont transférées sous l'action de jets d'air le long du rail de guidage 3, en étant suspendues par l'intermédiaire de leur collerette 2 sur les deux guides sous-col 4.

Plus particulièrement, dans l'exemple illustré, le convoyeur comprend un caisson principal 5 qui s'étend longitudinalement parallèlement au trajet des bouteilles 1, et qui est centré sur le trajet des bouteilles 1 selon un plan médian longitudinal (AA). Ce caisson 5 est scindé, par une cloison longitudinale 8, en une gaine longitudinale supérieure 6, dite par la suite gaine principale d'alimentation, et en une gaine longitudinale inférieure 7. La gaine longitudinale inférieure 7 est elle-même divisée en trois gaines longitudinales secondaires, par deux cloisons longitudinales intérieures 9 : deux gaines longitudinales extérieures 10 symétriques l'une de l'autre par rapport au plan médian (AA) et une gaine longitudinale centrale 11, centrée sur le plan médian (AA).

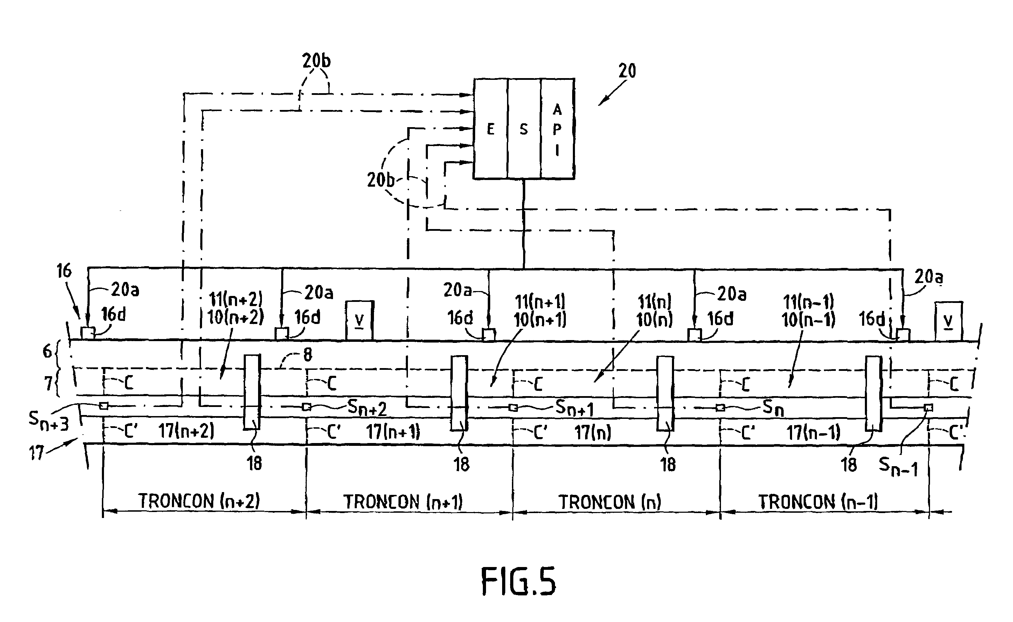

La paroi inférieure 12 de la gaine longitudinale centrale 11 est constituée par une tôle pliée en forme de U renversé, qui délimite un canal de soufflage 13 entre les guides sous- col 4 et la gaine longitudinale centrale 11. Dans la paroi 12 délimitant le canal de soufflage 13 sont prévues une pluralité de fentes de soufflage 14, qui sont judicieusement réparties sur toute la longueur et de part et d'autre du trajet des bouteilles 1. Les fentes de soufflage 14 font communiquer l'intérieur de la gaine centrale 11 avec le canal de soufflage 13 ; elles présentent une géométrie telle qu'en alimentant en air sous pression la gaine centrale 11, on crée à travers les fentes de soufflage 14 des jets d'air de transport (J') (figure 4) qui sont orientés vers le col des bouteilles 1, au-dessus de leur collerette et dans la direction de transport (T) des bouteilles 1.

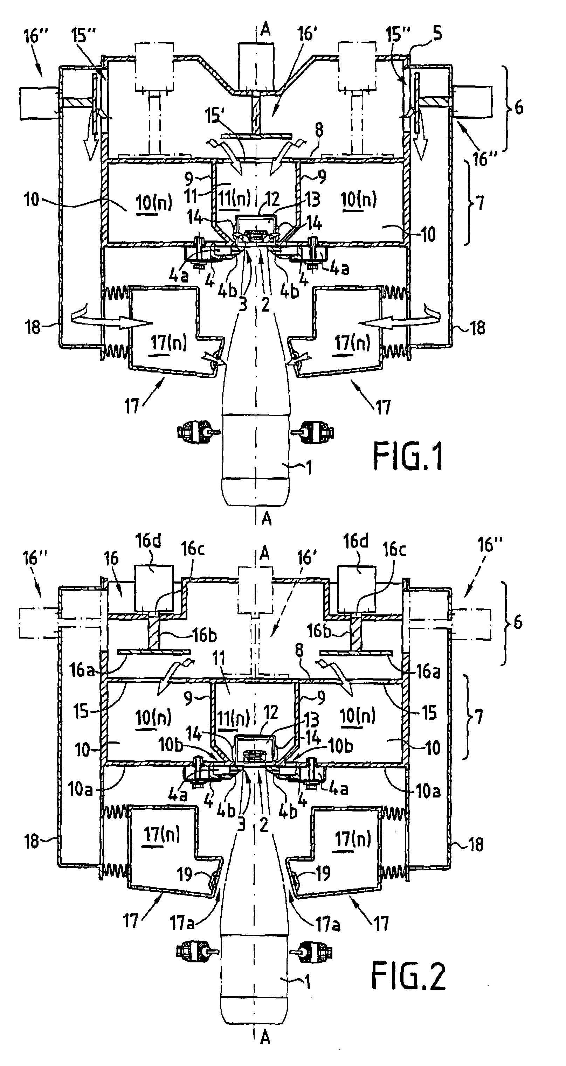

Si l'on se réfère aux figures 1 et 2, chaque guide sous-col 4 est constitué par une pièce longitudinale qui est fixée à la paroi inférieure 10a de chaque gaine longitudinale 10. Chaque guide sous-col 4 comporte une cavité longitudinale inférieure 4a qui communique avec la gaine longitudinale 10 correspondante, par des ouvertures ou fentes 10b prévues dans la paroi 10a de la gaine 10. Chaque guide-sous col 4 comporte en outre une pluralité de canaux de soufflage 4b qui sont judicieusement régartis sur toute la longueur du guide sous-col 4 et qui comportent une première extrémité débouchant dans la cavité longitudinale 4a et une seconde extrémité opposée débouchant à l'air libre à proximité et au-dessous du rail de guidage 3. Si l'on se réfère plus particulièrement à la figure 4, chaque canal de soufflage 4b est orienté de telle sorte qu'en alimentant en air sous pression la cavité longitudinale 4a par l'intermédiaire de la gaine longitudinale 10 correspondante, on crée une pluralité de jets d'air inverses (R), qui sont orientés en direction des bouteilles 1, légèrement au-dessous du niveau de leur collerette. Selon une caractéristique essentielle de l'invention, ces jets d'air inverses (R) sont dirigés dans une direction opposée à la direction de transport (T) des bouteilles, c'est-à-dire dans une direction opposée à celle des jets d'air de transport(J'),

Dans la variante particulière de réalisation illustrée sur les figures, chaque gaine longitudinale 10 est divisée en une pluralité de compartiments de soufflage inverse successifs [...,10(n+1), 10(n),10(n-1),...], par des cloisons intérieures (C) illustrées en pointillés sur la figure 5, et chaque compartiment de soufflage inverse {10(n)] est prévu pour être alimenté en air sous pression de manière individuelle. Dans l'exemple particulier illustré, les compartiments de soufflage inverse [...,10(n+1), 10(n),10(n-1),...] sont agencés par paire, de part et d'autre du trajet des bouteilles 1, chaque paire de compartiments de soufflage inverse 10(n) en vis-à-vis l'un de l'autre correspondant à un tronçon aéraulique (n).

Dans la variante préférée de réalisation illustrée sur les figures 1 et 2, Chaque compartiment 10(n) comporte, pour son alimentation en air sous pression, une ouverture d'admission d'air 15, qui est réalisée dans la paroi longitudinale 8, et qui permet de mettre en communication le compartiment 10(n) avec la gaine principale d'alimentation 6. Au niveau de chacune des ouvertures d'admission d'air 15 est prévu un organe 16 qui est commandable électriquement ou pneumatiquement, et qui d'une manière générale a pour fonction de permettre un réglage sur commande du débit d'air à l'entrée du compartiment 10(n) correspondant, c'est-à-dire du débit d'air passant à travers l'ouverture d'admission 15 correspondante.

Dans l'exemple particulier illustré, chaque organe 16 comporte d'une part une plaque de fermeture 16a qui est logée à l'intérieur de la gaine principale d'alimentation 6 au droit de l'ouverture d'admission d'air 15, et d'autre part des moyens (16b, 16c, 16d) permettant de déplacer, sur commande, la plaque 16a dans une direction transversale à l'ouverture d'admission d'air 15. Les moyens de déplacement de la plaque de fermeture 16a sont par exemple constitués par une tige filetée 16b mobile, qui est fixée transversalement à la plaque 16a, qui est montée rotative sur une bague 16c présentant un filetage intérieur complémentaire de celui de la tige filetée 16 et montée fixement à travers la paroi supérieure de la gaine principale d'alimentation 6. La tige filetée 16b peut être entraînée en rotation dans un sens ou dans l'autre par rapport à la bague 16c au moyen d'un moteur 16d. La mise en rotation de la tige filetée permet sa translation par rapport à la bague 16c, et permet par là-même en fonction du sens de rotation de la tige filetée d'éloigner ou de rapprocher la plaque 16a de l'ouverture d'admission d'air correspondante 15. En fonction de la position de la plaque 16a, la section de passage d'air entre la gaine longitudinale 6 et le compartiment 10 (n) est plus ou moins importante, ce qui permet de régler le débit d'ail à l'entrée du compartiment 10(n).

L'organe 16 est prévu de telle sorte que la plaque 16a peut prendre au moins deux positions extrêmes, une première position (figure 1) dans laquelle la plaque 16a vient fermer complètement l'ouverture d'admission 15 et isoler le compartiment correspondant 10 (n) de la gaine principale d'alimentation 6, et une seconde position extrême (figure 2), dans laquelle l'ouverture d'admission 15 n'est pas obturée par la plaque 16a, et la section de passage d'air est maximale. Dans une variante simplifiée de l'invention, il est envisageable que la plaque de fermeture 16a puisse être réglée en position uniquement dans l'une ou l'autre de ces deux positions extrêmes. Dans ce cas, la commande de l'alimentation en air sous pression de chaque compartiment 10(n) est de type tout ou rien. Pour la mise en oeuvre de cette variante simplifiée, on peut en outre avantageusement remplacer le moteur 16d, la bague 16c et la tige filetée 16b par un vérin pneumatique à deux positions commandé par l'intermédiaire d'une électrovanne. Dans une variante perfectionnée, l'organe 16 peut être prévu de telle sorte que la position de la plaque 16a puisse prendre plusieurs positions intermédiaires entre les deux positions extrêmes précitées, ce qui autorise un réglage plus fin du débit d'air à l'entrée du compartiment 10(n).

Si l'on se réfère à la figure 5, la gaine principale d'alimentation 6 est prévue pour être alimentée en air sous pression au moyen d'une pluralité de ventilateurs (V), qui sont judicieusement répartis sur toute la longueur de la gaine 6, Lorsque les ouvertures d'admission 15 des deux compartiments 10(n) d'un tronçon aéraulique (n) ne sont pas obturés par la plaque 16a ces compartiments 10(n) sont alimentés en air sous pression par la gaine 6, et on crée ainsi une pluralité de jets d'air (R) inverses au niveau du tronçon aéraulique (n) correspondant à ces compartiments.

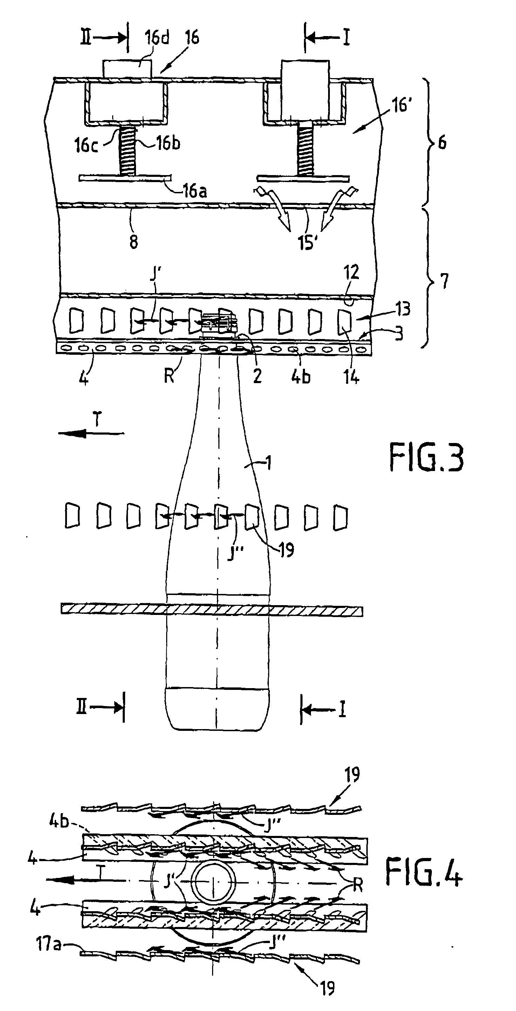

De manière similaire à ce qui vient d'être décrit pour la gaine longitudinale 10, la gaine longitudinale 11 est divisée en pluralité de compartiments successifs 11(n). Le découpage en compartiments aérauliques successifs de la gaine centrale 11 est de préférence identique à celui des gaines 10, chaque compartiment 11(n) appartenant au même tronçon aéraulique (n) que les compartiments correspondants 10(n). Chaque compartiment 11(n) comporte une ouverture d'admission d'air 15' (figures 1 et 3) qui permet de le mettre en communication avec la gaine principale d'alimentation 6, et est équipé d'un organe 16' identique et ayant la même fonction que l'organe 16 précédemment décrit et associé à chaque compartiment 10 (n). Il est ainsi avantageusement possible par l'intermédiaire de chaque organe 16', de commander l'alimentation en air sous pression du compartiment 11 (n) correspondant, et par là-même de créer sur commande une pluralité de jets d'air de transport (J') au niveau du tronçon aéraulique (n) correspondant à ce compartiment 11(n).

Dans la variante préférée de réalisation illustrée, le convoyeur à air comprend en outre deux caissons longitudinaux supplémentaires inférieurs 17, qui sont montés de part et d'autre du trajet des bouteilles 1 au-dessous du caisson 5, chaque caisson longitudinal 17 est divisé en une pluralité de compartiments successifs 17(n) par l'intermédiaire de cloisons latérales C' illustrées schématiquement en pointillés sur la figure 5. Chaque compartiment 17(n) communique de manière individuelle, pour son alimentation en air sous pression, avec la gaine principale d'alimentation 6, par l'intermédiaire d'une conduite d'alimentation 18 qui est raccordée à une ouverture d'admission d'air 15'' (figure 1) prévue dans une paroi de la gaine principale d'alimentation 6. A chaque compartiment 17(n) est associé un organe 16" identique et remplissant les mêmes fonctions que les organes 16 précédemment décrits. Chaque compartiment 17 (n) comporte une face de soufflage 17a dans laquelle sont prévues une pluralité de fentes de soufflage 19 qui permettent lorsque le compartiment 17(n) est alimenté en air sous pression, de créer une pluralité de jets d'air de transport (J") (figures 3 et 4) orientés sur le corps des bouteilles 1 et dans la direction de transport (T).

Si l'on se réfère à la figure 5, le convoyeur à air est également équipé d'un automate programmable industriel 20 qui permet de commander automatiquement, au moyen de signaux de commande 20a, les organes 16 de chaque compartiment de soufflage inverse 10(n), et par là-même de commander automatiquement et de manière sélective l'alimentation en air sous pression des deux compartiments 10(n) d'un tronçon aéraulique (n) donné. De manière similaire, l'automate programmable industriel 20 permet également la commande automatique et sélective des organes 16' et 16". Par souci de clarté sur la figure 5, les organes 16' et 16", ainsi que leurs signaux de commande gérés par l'automate programmable industriel 20 n'ont pas été représentés.

Le convoyeur à air est également équipé, au niveau de chaque tronçon aéraulique (n), d'au moins un capteur (Sₙ) qui a pour fonction de détecter la présence de bouteilles 1 dans le tronçon aéraulique (n). De préférence, tel qu'illustré sur la figure 5, chaque capteur (Sₙ) est positionné à l'entrée du tronçon aéraulique (n), par rapport à la direction de transport (T). Il s'agit de préférence de capteurs sans contact tels que par exemple des capteurs optiques, du type cellules photo-électriques, ou encore de capteurs à ultrasons. Chaque capteur (Sₙ) délivre pour le module d'entrée de l'automate programmable industriel 20, un signal de décection 20b, qui est exploité par l'automate programmable industriel 20 pour gérer les signaux de commande 20a.

De manière avantageuse, le convoyeur à air de l'invention, dont une variante préférée de réalisation vient d'être décrite en référence aux figures 1 à 5, permet de réaliser un déblocage rapide automatisé et à distance sans intervention manuelle, de bouteilles bloquées accidentellement dans le convoyeur à air au cours de leur transport. Cet avantage apparaîtra plus clairement à la lumière de la description ci-après d'un exemple particulier de mise en oeuvre du convoyeur à air des figures 1 à 5.

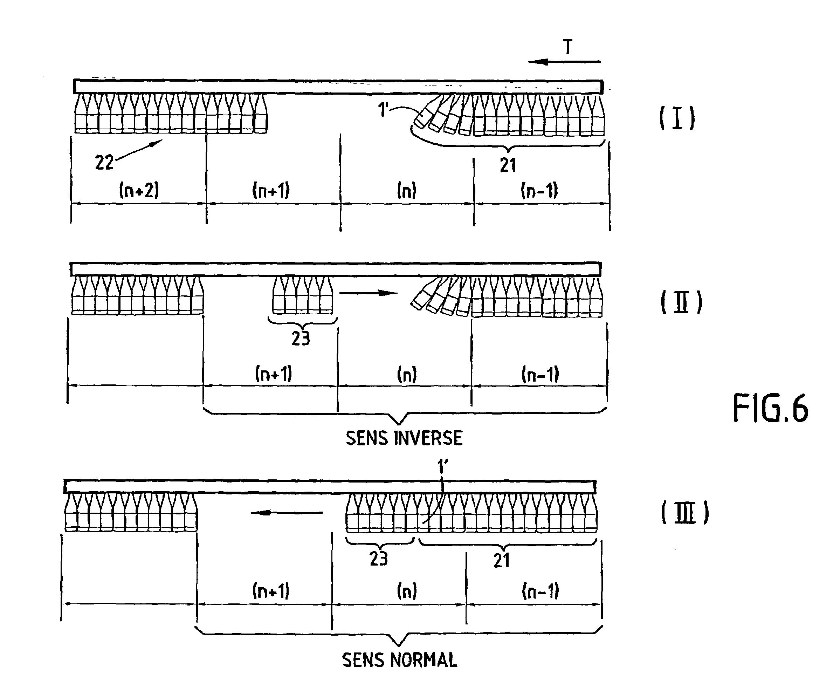

On a représenté sur la figure 6 une phase (I) de blocage d'un train 21 de bouteilles dans un tronçon aéraulique (n), et les deux phases principales consécutives (II et III) de déblocage et de reprise du transport des bouteilles débloquées. Sur cette figure 6, par souci de simplification, les caissons de soufflage 17 n'ont pas été représentés.

En phase normale de transport des bouteilles, chaque tronçon aéraulique (n) du convoyeur est par exemple dans la configuration de la figure 1, dite ci-après *sens normal de transport.* Dans cette configuration, toutes les ouvertures d'admission d'air 15 des deux gaines 10 sont fermées, et toutes les ouvertures d'admission d'air 15' et 15" sont ouvertes. La gaine principale d'alimentation 6 étant constamment alimentée en air sous pression par les ventilateurs (V), tous les compartiments de la gaine centrale 11, de même que tous les compartiments des caissons 17, sont par conséquent alimentés en air sous pression, et génèrent le long du trajet des bouteilles une pluralité de jets d'air de transport J' et J" qui permettent de propulser les bouteilles 1 suspendus sur les guides sous-col 4, le long du rail de guidage 3 formé par ces guides sous-col 4 et dans la direction de transport T. Les différents compartiments 10(n) des deux gaines (10) ne sont quant à eux pas alimentés en air sous pression, et on ne génère par conséquent pas de jet d'air inverse (R) le long du trajet des bouteilles. Avantageusement, dans cette configuration en sens normal de transport, en agissant sur la position des plaques de fermeture associées aux ouvertures d'admission 15' et 15", on agit au niveau de chaque tronçon aéraulique (n), sur la vitesse des jets d'air de transport J' et J", ce qui permet d'optimiser, au niveau de chaque tronçon aéraulique, la vitesse de convoyage des bouteilles,

Au cours de leur transport, les bouteilles ont tendance à osciller d'avant en arrière dans le plan vertical (AA). Si l'on se réfère à la phase (I) de la figure 6, on observe que la bouteille de tête 1' du train de bouteilles 21 a oscillé au cours de son transport vers l'avant d'un angle trop important et se trouve bloquée entre les deux guides sous-col 4 au niveau du tronçon aéraulique (n). Les bouteilles suivantes du train 21 sont venues percuter cette bouteille 1' en blocage avant et viennent en appui, en étant comprimées les unes par rapport aux autres, sur cette bouteille 1', renforçant ainsi son blocage par rapport aux guides sous-col 4. Sur la figure 6, le train de bouteilles 22 situé en aval du train 21 de bouteilles est supposé être en mouvement dans la direction de transport (T).

Dans l'exemple particulier illustré à la phase (I) de la figure 6, les capteurs (Sₙ) et (Sₙ₋₁) des tronçons aérauliques (n) et (n-1) délectent le blocage du train 21 de bouteilles, tandis que les autres capteurs du convoyeur, et en particulier le capteur (Sₙ₊₁) immédiatement en aval du capteur (Sₙ) ne détecte aucun blocage. L'automate programmable 20 est programmé pour dans un premier temps déterminer parmi le ou les capteurs délivrant un signal de détection 20b caractéristique d'un blocage, celui qui se trouve le plus en aval par rapport à la direction de transport (T), Dans l'exemple de la figure 6, l'automate 20 détermine automatiquement qu'il s'agit du capteur (Sₙ), et par là-même que le point de blocage du train 21 se trouve localisé au niveau du tronçon aéraulique (n). L'automate programmable 20 est programmé pour dans un deuxième temps commander de manière sélective les organes 16, 16' et 16" des compartiments au moins du tronçon aéraulique dans lequel un point de blocage a été détecté, c'est-à-dire en l'espèce les organes 16, 16' et 16" des compartiments 10(n), 11(n) et (17n) du tronçon aéraulique (n), en sorte de configurer le tronçon aéraulique (n) en *sens inverse de transport*, tel que cela est illustré sur la figure 2. De préférence, l'automate programmable est également programmé pour également commander de manière sélective les organes 16, 16' et 16" des compartiments du tronçon aéraulique (n-1), c'est-à-dire du tronçon situé immédiatement en amont du tronçon dans lequel un blocage a été détecté, en sorte de configurer également ce tronçon (n-1) en sens inverse du transport. Dans cette configuration en sens inverse de transport, les ouvertures d'admission d'air 15 de chaque compartiment 10(n) et 10(n-1) ne sont plus obturées par les plaques de fermeture 16a ; les compartiments 10(n) et 10(n-1) des tronçons aérauliques (n) et (n-1) sont par conséquent alimentés en air sous pression, ce qui a pour effet de générer sur le train de bouteilles 21 dans les tronçons aérauliques (n) et (n-1), des 'jets d'air inverse (R). Les ouvertures d'admission d'air 15' et 15" des compartiments 11 (n) et 17(n) du tronçon aéraulique (n) et des compartiments 11(n-1) et 17(n-1) du tronçon (n-1) sont obturées, aucun jet d'air de transport J' ou J" n'est généré dans les tronçons aérauliques (n) et (n-1). Les jets d'air inverses (R) permettent avantageusement de décomprimer les bouteilles du train 21 les unes par rapport aux autres, et par là-même de supprimer la poussée mécanique exercée sur la bouteille de tête 1' en blocage avant.

L'action des jets d'air inverse (R) engendrés de manière sélective dans le tronçon aéraulique (n), et dans une variante préférée dans le tronçon (n-1) immédiatement en amont, ne suffit pas la plupart du temps pour obtenir le déblocage de la bouteille 1' en cas de blocage avant. Pour cette raison, s'agissant d'un blocage de type avant, l'automate programmable 20 est en outre avantageusement programmé pour dans un troisième temps, d'une part déterminer automatiquement à partir des signaux de détection 20b dans quel tronçon aéraulique la bouteille précédant la bouteille 1' en blocage avant se trouve positionnée, et pour d'autre part commander automatiquement les organes 16, 16' et 16" de ce tronçon aéraulique aval, et s'il y a lieu de tous les tronçons aérauliques situés entre ce tronçon aval et le tronçon dans lequel le blocage a été détecté, en sorte de configurer ces tronçons aérauliques en sens inverse de convoyage. Dans l'exemple particulier illustré à la figure 6, la bouteille située immédiatement en aval de la bouteille 1' en blocage avant est localisée au niveau du tronçon (n+1) immédiatement en aval du tronçon aéraulique (n) dans lequel le point de blocage a été détecté. En conséquence, seul ce tronçon aéraulique aval (n+1) est configuré automatiquement en sens inverse de convoyage. Dans l'hypothèse où par exemple la bouteille précédant la bouteille 1' en blocage avant se serait trouvé dans le tronçon (n+2), l'automate programmable commanderait automatiquement non seulement les organes 16, 16' et 16" du tronçon aéraulique (n+2), mais également ceux du tronçon aéraulique (n+1) en sorte de les configurer en sens inverse de convoyage. Il en résulte que la ou les bouteilles situées dans ces tronçons aérauliques en aval configurés en sens inverse du convoyage sont réacheminées vers l'arrière (phase II de la figure 6) sous la forme d'un train de bouteilles 23 qui vient percuter la bouteille 1' en blocage avant. On met ainsi en oeuvre de manière avantageuse une action mécanique complémentaire pour le déblocage de la bouteille 1'.

Lorsque l'automate programmable 20 détecte via le signal de détection 20b délivré par les capteur (Sₙ) associé aux tronçon aéraulique (n) un déblocage effectif du train de bouteilles 21, ou éventuellement, dans une autre variante de réalisation, après une temporisation déterminée, l'automate programmable 20 commande automatiquement dans un quatrième temps les organes 16, 16' et 16" des tronçons aérauliques qui ont été configurés en sens inverse de transport, c'est-à-dire dans l'exemple précité les organes 16, 16' et 16" des tronçons aérauliques (n-1), (n) et (n+1), en sorte de configurer de nouveau ces tronçons aérauliques en sens normal de transport. Le train de bouteilles formé par le train de bouteilles 21 et par le train 23 de bouteilles qui a été réacheminé vers l'arrière au contact de la bouteille 1' reprennent donc leur sens normal de convoyage (direction de transport T), sous l'action des jets d'air de transport J' et J''. Il convient de noter que les bouteilles du train 21 situées en amont de la bouteille 1' se sont écartées de cette bouteille en revenant en arrière par rapport à la direction de transport, lorsque les tronçons (n) et (n-1) étaient configurés en sens inverse de transport. Lorsque les tronçons (n) et (n-1) sont de nouveau configurés en sens normal de transport, les bouteilles viennent percuter la bouteille 1' et exercent par là-même une action mécanique complémentaire de déblocage sur cette bouteille.

On a décrit en référence à la figure 6 un exemple particulier de mise en oeuvre du procédé de l'invention, appliqué à un cas particulier de blocage avant d'une bouteille 1'. Bien évidemment, le procédé de l'invention peut d'une manière générale s'appliquer à tout type de blocage, et notamment à des blocages de type arrière.

Le convoyeur de l'invention, dont une variante préférée de réalisation et de mise en oeuvre ont été décrites en référence aux figures 1 à 6, permet avantageusement, et d'une manière générale, d'agir de manière très réactive et localisée au niveau d'un tronçon aéraulique, sur la vitesse et le sens de convoyage des articles. Ainsi, outre le déblocage d'articles, le convoyeur permet également, par une commande appropriée des moyens d'alimentation en air sous pression des compartiments de chaque tronçon aéraulique, d'adapter la vitesse des articles dans chaque tronçon aéraulique, et par exemple de réaliser un frein aéraulique au niveau d'un ou plusieurs tronçons successifs dans une partie donnée du convoyeur ou encore d'immobiliser temporairement les articles dans un ou plusieurs tronçons ; dans ce cas, au niveau de ces tronçons aérauliques, on génère simultanément des jets d'air de transport (J' et/ou J") et des jets d'air inverses (R). Il est outre avantageusement possible par une commande appropriée des moyens d'alimentation en air sous pression des compartiments d'un tronçon aéraulique donné, de transformer ce tronçon en cadenceur d'articles. Pour transformer un tronçon aéraulique (n), en cadenceur d'articles, on configure par exemple les tronçons (n+1) et (n-1) en aval et amont de ce tronçon (n) en sens normal de convoyage ; on commande d'une part les organes 16, des compartiments 10(n) du tronçon (n) en sorte d'ouvrir les ouvertures d'admission d'air 15, et de générer des flux d'air inverses (R) dans le tronçon (n) et d'autre part on commande les organes 16' et 16" des compartiments 11(n) et 17(n) du tronçon (n) en sorte également d'ouvrir les admissions d'air 15' et 15" et par là-même de générer des jets d'air de transport (J') et (J") dans le tronçon (n) simultanément aux jets d'air inverses (R). La commande des organes 16, 16' et 16'' est réalisée de telle sorte que la puissance aéraulique des jets d'air de transport (J') et (J") est supérieure à celle des jets d'air inverses (R). Ceci a pour effet d'acheminer les bouteilles dans le tronçon aéraulique (n) dans leur direction de transport mais avec une vitesse plus faible, jusqu'à l'entrée du tronçon aval (n+1), où les bouteilles reprennent de la vitesse, d'où l'effet de cadencement. Dans le tronçon aval (n + 1) il est envisageable de mettre en oeuvre simultanément des jets d'air de transport (J') et (J") et des jets d'air inverses (R), l'essentiel étant que les bouteilles soient accélérées en sortie du tronçon (n).

La fonction des cloisons de séparations C ou C' est de créer des compartiments de soufflage dont la pression statique interne peut être réglée de manière individuelle pour chaque compartiment. Par conséquent, il n'est pas nécessaire que les cloisons soient parfaitement étanches, et on peut tolérer un débit de fuite entre compartiments adjacents, tant que ce débit de fuite reste suffisamment faible au regard des pressions statiques mises en jeu ; on peut en outre mettre en oeuvre des cloisons C ou C' qui ne sont pas pleines, à condition que les cloisons utilisées permettent de créer une perte de charge suffisamment importante, pour que les compartiments puissent être considérés comme substantiellement indépendants d'un point de vue aéraulique. Egalement, les compartiments ne sont pas nécessairement réalisés en cloisonnant une gaine longitudinale, mais peuvent être constitués par des caissons structurellement indépendants.

Dans l'exemple préféré de réalisation qui a été décrit, le découpage en compartiments de la gaine centrale 11 et des caissons longitudinaux inférieurs 17 permet, lors d'une opération de déblocage des articles, d'arrêter la production des jets d'air de transport (J', J") de manière localisée, au niveau du ou des tronçons aérauliques où sont mis en oeuvre temporairement les jets d'air inverses (R), ce qui permet avantageusement d'éviter de perturber le fonctionnement du convoyeur dans les autres tronçons. Ce découpage en compartiments des moyens pneumatiques permettant de propulser les articles dans la direction de transport (T) n'est toutefois pas obligatoire et n'est pas limitatif de l'invention.

Dans l'exemple préféré de réalisation qui a été décrit, les compartiments de soufflage inverse [...,10(n+1), 10(n), 10(n-1),...] sont reliés de manière individuelle pour leur alimentation en air sous pression à la gaine principale d'alimentation 6, et pour chaque compartiment de soufflage inverse est prévu un organe 16 permettant de régler le débit d'air à l'entrée du compartiment . Cette caractéristique n'est pas limitative de l'invention. Dans une autre variante, on pourrait prévoir d'alimenter chaque compartiment de soufflage inverse au moyen par exemple d'un ventilateur qui lui est propre, et de plus faible puissance comparativement aux ventilateurs (V) de la gaine principale d'alimentation 6.

Dans le convoyeur des figures 1 à 5, les jets d'air de transport (J') et (J") sont générés respectivement au-dessus et au-dessous du rail de guidage (3), et les jets d'air inverses (R) sont générés à un niveau intermédiaire situé entre les niveaux des jets d'air de transport (J') et (J"). Ceci n'est toutefois pas limitatif de l'invention. En particulier, dans une autre variante, il est envisageable de réaliser un convoyeur à air mettant en oeuvre en combinaison avec les jets d'air inverses (R), un seul type de jets d'air de transport (J') ou (J"). Egalement, dans l'exemple particutier des figures 1 à 5, les jets d'air inverses sont générés à proximité et au-dessous du rail de guidage 3. Cette localisation particulière des jets d'air inverses (R) n'est toutefois pas limitative de l'invention, les jets d'airs inverses (R) pouvant d'une manière générale être dirigés sur une portion quelconque des articles. On peut toutefois noter qu'il est avantageux de générer les jets d'air inverses (R) à proximité immédiate du rail de guidage 3, c'est-à-dire au niveau de la collerette 2 des articles 1, afin de réduire au minimum le moment par rapport au rail de guidage 3 de la pression exercée par les jets d'airs inverses sur les articles, et par là-même d'éviter que les jets d'air inverses ne viennent accentuer l'angle de balancement des articles dans un plan vertical.

## Revendications

1. Convoyeur à air pour le transport d'articles, du type comportant un rail de guidage (3) sur lequel les articles (1) sont destinés à être suspendus pour leur transport, et des premiers moyens pneumatiques (11,17) permettant la propulsion des articles le long du rail de guidage dans une direction de transport donnée (T), **caractérisé en ce qu'**il comprend en outre des deuxièmes moyens pneumatiques (10) qui sont conçus pour générer sur commande une pluralité de jets d'air inverses (R) orientés sur les articles dans une direction opposée à celle de leur direction de transport.

2. Convoyeur selon la revendication 1 **caractérisé en ce que** les deuxièmes moyens pneumatiques comportent une pluralité de compartiments de soufflage inverse [..,10(n-1), 10(n), 10(n+1),...] qui sont disposés le long du trajet des articles et qui sont conçus pour être alimentés de manière individuelle en air sous pression.

3. Convoyeur selon la revendication 2 **caractérisé en ce qu'**il comprend des moyens de commande automatique (20,16) de l'alimentation en air de chaque compartiment de soufflage inverse [...,10(n-1), 10(n), 10(n+1),...], et des moyens de détection (..., Sₙ₋₁, Sₙ, Sₙ₊₁,...) du blocage d'un ou plusieurs articles dans le convoyeur, qui délivrent des signaux de détection (20b) pour les moyens de commande, et **en ce que** les moyens de commande sont conçus pour commander automatiquement et de manière sélective, à partir des signaux de détection (20b), l'alimentation en air au moins du compartiment de soufflage inverse 10(n) au niveau duquel un point de blocage a été détecté.

4. Convoyeur selon la revendication 3 **caractérisé en ce que** les moyens de commande sont conçus pour commander automatiquement et de manière sélective, à partir des signaux de détection (20b) l'alimentation en air également du compartiment de soufflage inverse 10(n-1) immédiatement en amont du compartiment 10(n) dans lequel un point de blocage a été détecté.

5. Convoyeur selon la revendication 3 ou 4 **caractérisé en ce que** les moyens de commande (20,16) sont également conçus pour commander automatiquement, à partir des signaux de détection (20b) l'alimentation en air d'au moins un compartiment de soufflage inverse 10(n+1) situé immédiatement en aval du compartiment 10(n) au niveau duquel un blocage a été détecté, en sorte de faire revenir en arrière un ou plusieurs articles situés en aval du point de blocage.

6. Convoyeur selon l'une des revendications 1 à 5 **caractérisé en ce que** les premiers moyens pneumatiques comportent une pluralité de compartiments de soufflage [(...,11(n-1), 11(n), 11(n+1),...) /(..., 17(n-1), 17(n), 17(n+1),... ] qui sont disposés le long du trajet des articles, qui sont conçus pour être alimentés en air sous pression, de manière individuelle et sur commande, et qui permettent, une fois alimenté en air sous pression, de générer une pluralité de jets d'air de transport (J' et/ou J"") orientés sur les articles dans la direction de transport (T).

7. Convoyeur selon la revendication 6 **caractérisé en ce que** les compartiments [(...,11(n-1), 11(n), 11(n+1),..) /(..., 17(n-1), 17(n), 17(n+1),... ] des premiers moyens pneumatiques et les compartiments de soufflage inverse [...,10(n-1), 10(n), 10(n+1),...] des deuxièmes moyens pneumatiques constituent une pluralité de tronçons aérauliques successifs [...,(n-1), (n), (n+1),...].

8. Convoyeur selon l'une des revendication 1 à 7 **caractérisé en ce que** les premiers et deuxièmes moyens pneumatiques sont alimentés en air sous pression par une gaine d'alimentation principale (6) qui s'étend le long du trajet des articles (1).

9. Convoyeur selon l'une des revendications 1 à 8 **caractérisé en ce que** les premiers moyens pneumatiques sont conçus pour générer des jets d'air de transport (J') et (J") au-dessus et au- dessous du rail de guidage (3), et **en ce que** les deuxièmes moyens pneumatiques sont conçus pour générer des jets d'air inverses (R) à un niveau situé entre les niveaux des jets d'air de transport (J') et (J").

10. Convoyeur selon l'une des revendications 1 à 9 **caractérisé en ce que** les deuxièmes moyens pneumatiques sont conçus pour générer des jets d'air inverses localisés à proximité immédiate du rail de guidage (3).

11. Procédé de déblocage d'un article ou d'une pluralité d'articles qui se sont bloqués en cours de transport dans un convoyeur à air, dans lequel les articles (1) sont transportés en étant suspendus, **caractérisé en ce qu'**il consiste à générer temporairement, au moins sur tout ou partie des articles qui sont bloqués, des jets d'air inverses (R) qui sont orientés dans la direction opposée à la direction de transport (T) des articles.

12. Procédé selon la revendication 11 **caractérisé en ce qu'**on génère en outre temporairement, en aval du point de blocage, des jets d'air inverses (R) orientés dans la direction opposée à celle de la direction de transport (T) des articles, en sorte de faire revenir en arrière au moins un article situé immédiatement en aval du point de blocage et de l'acheminer au contact du ou des articles bloqués.

13. Procédé de ralentissement ou d'immobilisation d'un ou plusieurs articles qui sont suspendus et propulsés le long d'un rail de guidage (3), **caractérisé en ce qu'**il consiste à générer sur les articles des jets d'air inverses (R) qui sont orientés dans la direction opposée à la direction de transport (T) des articles.

14. Procédé de cadencement d'articles suspendus et propulsés le long d'un rail de guidage (3) sous l'action de jets d'air de transport dans une direction de transport donnée (T), **caractérisé en ce qu'**il consiste d'une part sur une première portion du trajet des articles, à ralentir et éventuellement à immobiliser le ou les articles en générant sur les articles dans cette première portion des jets d'air inverses (R) orientés dans la direction inverse de transport des articles, et d'autre part en sortie de la première portion à accélérer le ou les articles sous l'action des jets d'air de transport.

## Claims

1. Air conveyor for the transport of articles, of the type comprising a guide rail (3) on which the articles (1) are to be suspended in order to be transported, and first pneumatic means (11, 17) enabling the articles to be propelled along the guide rail in a given direction of transport (T), **characterised in that** it further includes second pneumatic means (10) which are designed to generate, when operated, a plurality of reverse air jets (R) orientated onto the articles in a direction opposite that of their direction of transport.

2. Conveyor according to claim 1, **characterised in that** the second pneumatic means comprise a plurality of reverse blowing compartments [..., 10(n-1), 10(n), 10(n+1), ...] which are disposed along the path of the articles and which are designed to be individually supplied with pressurised air.

3. Conveyor according to claim 2, **characterised in that** it includes means (20, 16) for automatically controlling the supply of air to each reverse blowing compartment [..., 10(n-1), 10(n), 10(n+1), ...], and means (..., Sₙ₋₁, Sₙ, Sₙ₊₁, ...) for detecting the jamming of one or more articles in the conveyor, which output detection signals (20b) for the control means, and **in that** the control means are designed for automatically and selectively controlling, on the basis of the detection signals (20b), the supply of air at least to the reverse blowing compartment 10(n) in the area of which a point of jamming has been detected.

4. Conveyor according to claim 3, **characterised in that** the control means are also designed for automatically and selectively controlling, on the basis of the detection signals (20b), the supply of air to the reverse blowing compartment 10(n-1) immediately upstream of the compartment 10(n) in which a point of jamming has been detected.

5. Conveyor according to claim 3 or 4, **characterised in that** the control means (20, 16) are also designed for automatically controlling, on the basis of the detection signals (20b), the supply of air to at least a reverse blowing compartment 10(n+1) located immediately downstream of the compartment 10(n) in the area of which a jam has been detected, so as to cause one or more articles located downstream of the point of jamming to return rearwards.

6. Conveyor according to one of claims 1 to 5, **characterised in that** the first pneumatic means comprise a plurality of blowing compartments [(...,11(n-1), 11(n), 11(n+1),...)/(..., 17(n-1), 17(n), 17(n+1),...] which are disposed along the path of the articles, which are designed to be supplied with pressurised air, individually and upon operation, and which permit, once supplied with pressurised air, the generation of a plurality of air transport jets (J' and/or J") orientated onto the articles in the direction of transport (T).

7. Conveyor according to claim 6, **characterised in that** the compartments [(...,11(n-1), 11(n), 11(n+1),...) / (...,17(n-1), 17(n), 17(n+1),...] of the first pneumatic means and the reverse blowing compartments [...,10(n-1), 10(n), 10(n+1),...] of the second pneumatic means constitute a plurality of successive aeraulic sections [...,(n-1), (n), (n+1), ...].

8. Conveyor according to one of claims 1 to 7, **characterised in that** the first and second pneumatic means are supplied with pressurised air by a main supply duct (6) which extends along the path of the articles (1).

9. Conveyor according to one of claims 1 to 8, **characterised in that** the first pneumatic means are designed to generate transport air jets (J') and (J") above and below the guide rail (3), and **in that** the second pneumatic means are designed to generate reverse air jets (R) at a level located between the levels of the transport air jets (J') and (J").

10. Conveyor according to one of claims 1 to 9, **characterised in that** the second pneumatic means are designed to generate reverse air jets located in the immediate vicinity of the guide rail (3).

11. Process for freeing an article or a plurality of articles that are jammed during transport in an air conveyor, in which the articles (1) are transported while suspended, **characterised in that** it consists in temporarily generating, at least over all or some of the articles that are jammed, reverse air jets (R) which are orientated in the direction opposite the direction of transport (T) of the articles.

12. Process according to claim 11, **characterised in that** there are further temporarily generated, downstream of the point of jamming, reverse air jets (R) orientated in the direction opposite that of the direction of transport (T) of the articles, so as to cause at least one article located immediately downstream of the point of jamming to return rearwards and to be directed into contact with the article or articles jammed.

13. Process for slowing down or immobilising one or more articles that are suspended and propelled along a guide rail (3), **characterised in that** it consists in generating on the articles reverse air jets (R) that are orientated in the direction opposite the direction of transport (T) of the articles.

14. Process for imparting a rhythm to articles suspended and propelled along a guide rail (3) through the action of transport air jets in a given direction of transport (T), **characterised in that** it consists, on the one hand, over a first portion of the path of the articles, in slowing down and possibly immobilising the article or articles by generating on the articles in this first portion reverse air jets (R) orientated in the direction opposite that of transport of the articles and, on the other hand, at the exit from the first portion, in accelerating the article or articles through the action of the transport air jets.

## Patentansprüche

1. Luftfördervorrichtung zum Transportieren von Gegenstanden des Typs. der umfasst eine Führungsschiene (3), an der die Gegenstände (1) für ihren Transport aufgehängt werden soilen, und erste pneumatische Einrichtungen (11, 17), die das Vorwärtsschieben der Gegenstände entlang der Führungsschiene in einer gegebenen Transportrichtung (T) ermöglichen,
**dadurch gekennzeichnet, dass** sie außerdem zweite pneumatische Einrichtungen (10) umfasst, die so konzipiert sind, dass sie auf Befehi eine Vielzahl von inversen Luftstrahlen (R) erzeugen, die in einer Richtung entgegengesetzt zu ihrer Transportrichtung auf die Gegenstände gerichtet sind.

2. Luftfördervorrichtung nach Anspruch 1, **dadurch gekennzeichnet, dass** die zweiten pneumatischen Einrichtungen eine Vielzahl von inversen Blas-Abteilen [...,10(n-1), 10(n), 10(n+1),...] umfassen, die entlang des Transportweges der Gegenstände angeordnet und so konzipiert sind, dass ihnen individuell Druckluft zugeführt werden kann.

3. Luftfördervorrichtung nach Anspruch 2, **dadurch gekennzeichnet, dass** sie Einrichtungen (20, 16) zur automatischen Einführung von Luft in jedes inverse Blas-Abteil [...,10(n-1), 10(n), 10(n+1),...] sowie Einrichtungen (..., Sₙ₋₁, Sₙ, Sₙ₊₁,...) zur Erkennung einer Blockierung eines oder mehrerer Gegenstände in der Fördervorrichtung aufweist, die Erkennungssignale (20b) an die Steuereinrichtungen abgeben und dass die Steuereinrichtungen so konzipiert sind, dass sie auf der Basis der Erkennungssignale (20b) automatisch und selektiv die Zufuhr von Luft mindestens in das inverse Blas-Abteil 10(n) steuern, in dessen Bereich eine Blockierung festgestellt worden ist.

4. Luftfördervorrichtung nach Anspruch 3, **dadurch gekennzeichnet, dass** die Steuereinrichtungen so konzipiert sind, dass sie auf der Basis der Erkennungssignale (20b) die Zufuhr von Luft auch in das inverse Elas-Abteil 10(n-1) unmittelbar vor (stromaufwärts) dem Abteil 10(n), in dem die Blockierung festgestellt worden ist, automatisch und selektiv steuern.

5. Luftfördervorrichtung nach Anspruch 3 oder 4, **dadurch gekennzeichnet, dass** die Steuereinrichtungen (20, 16) außerdem so konzipiert sind, dass sie auf der Basis der Erkennungssignale (20b) die Zuführung von Luft in mindestens ein inverses Blas-Abteil 10(n+1) unmittelbar nach (stromabwärts) dem Abteil 10(n), in dessen Bereich eine Blockierung festgestellt worden ist, automatisch so steuern, dass ein oder mehrere Gegenstände, die nach dem Blokkierungspunkt angeordnet sind, nach hinten zurückgeschoben werden können.

6. Luftförderrvorrichtung nach einem der Ansprüche 1 bis 5, **dadurch gekennzeichnet, dass** die ersten pneumatischen Einrichtungen eine Vielzahl von Blas-Abteilen [(...,11(n-1), 11(n), 11(n+1),...)/(..., 17(n-1), 17(n), 17(n+1),...] aufweisen, die entlang des Transportweges der Gegenstände angeordnet und so konzipiert sind, dass ihnen individuell und auf Befehl Druckluft zugeführt werden kann und die, wenn ihnen einmal Druckluft zugeführt worden ist, eine Vielzahl von Transportluftstrahlen (J' und/oder J") erzeugen können, die auf die Gegenstände in der Transportrichtung (T) gerichtet sind.

7. Luftförderrvorrichtung nach Anspruch 6, **dadurch gekennzeichnet, dass** die Abteile [(...,11(n-1), 11(n), 11(n+1),...)/(..., 17(n-1), 17(n), 17(n+1),...] der ersten pneumatischen Einrichtungen und die inversen Blas-Abteile [...,10(n-1), 10(n), 10(n+1),...] der zweiten pneumatischen Einrichtungen eine Vielzahl von aufeinanderfolgenden aeraulischen Abschnitten [...,(n-1), (n), (n+1),...] darstellen.

8. Luftförderrvorrichtung nach einem der Ansprüche 1 bis 7, **dadurch gekennzeichnet, dass** die ersten und zweiten pneumatischen Einrichtungen mittels eines Hauptzuführungskanals (6) mit Druckluft versorgt werden, der sich entlang des Transportweges der Gegenstände (1) erstreckt.

9. Luftförderrvorrichtung nach einem der Ansprüche 1 bis 8, **dadurch gekennzeichnet, dass** die ersten pneumatischen Einrichtungen so konzipiert sind, dass sie Trnsport-Luftstrahlen (J') und (J") oberhalb und unterhalb der Führungsschiene (3) erzeugen, und dass die zweiten pneumatischen Einrichtungen so konzipiert sind. dass sie inverse Luftstrahlen (R) in einem Bereich zwischen den Bereiches der Transport-Luftstrahlen (J') und (J") erzeugen.

10. Luftförderrvorrichtung nach einem der Ansprüche 1 bis 9, **dadurch gekennzeichnet, dass** die zweiten pneumatischen Einrichtungen so konzipiert sind, dass sie inverse Luftstrahlen erzeugen, die in unmittelbarer Nachbarschaft zu der Führungsschiene (3) angeordnet sind.

11. Verfahren zur Beseitigung der Blockierung eines Gegenstandes oder einer Vielzahl von Gegenständen, die während des Transports in einer Luftförderrvorrichtung, in der die Gegenstände (1) im aufgehängten Zustand transportiert werden, aufgetreten ist, **dadurch gekennzeichnet, dass** vorübergehend inverse Luftstrahlen (R) erzeugt werden, die mindestens auf alle oder einen Teil der blockierten Gegenstände gerichtet werden in einer Richtung, die entgegengesetzt zur Transportrichtung (T) der Gegenstände ist.

12. Verfahren nach Anspruch 11, **dadurch gekennzeichnet, dass** außerdem vorübergehend unterhalb des Blockierungspunktes inverse Luftstrahlen (R) erzeugt werden, die in einer Richtung orientiert sind, die entgegengesetzt zur Transportrichtung (T) der Gegenstände ist, sodass mindestens ein Gegenstand, der unmittelbar nach dem Blockierungspunkt angeordnet ist, nach hingen geschoben und mit dem oder den blockierten Gegenstanden in Kontakt gebracht werden kann.

13. Verfahren zur Verlangsamung oder zum Anhalten eines oder mehrerer Gegenstände, die im aufgehängten Zustand entlang einer Führungsschiene (3) nach vorne geschoben werden, **dadurch gekennzeichnet, dass** inverse Luftstrahlen (R) auf die Gegenstände gerichtet werden, die in einer Richtung ausgerichtet sind, die entgegengesetzt zur Transportrichtung (T) der Gegenstände ist.

14. Verfahren zur zeitlichen Steuerung von Gegenstanden, die an einer Führungsschiene (3) aufgehängt und vorwärts geschoben werden unter der Einwirkung von Transport-Luftstrahlen in einer gegebenen Transportrichtung (T), **dadurch gekennzeichnet, dass** einerseits in einem ersten Abschnitt des Transportweges der Gegenstände der oder die Gegenstände verlangsamt und gegebenenfalls angehalten werden durch Erzeugung von inversen Luftstrahlen (R), die in diesem ersten Abschnitt auf die Gegenstände einwirken, die in einer Richtung ausgerichtet sind, die entgegengesetzt zur Transportrichtung der Gegenstände ist, und dass andererseits am Ende des ersten Abschnitts der oder die Gegenstände unter der Einwirkung von Transport-Luftstrahlen beschleunigt wird (werden).
